# EUROPEAN PATENT APPLICATION

(11) **EP 4 697 162 A1**
(43) Date of publication of application: **18.02.2026**
(21) Application number: 24814062.6
(22) Date of filing: 26.04.2024
(51) Int. Cl.: G06F 9/30

(54) **OPERATOR COMPILING METHOD AND APPARATUS**

(30) Priority: 31.05.2023 CN 202310639274; 22.08.2023 CN 202311070464
(71) Applicant: Huawei Technologies Co., Ltd., Shenzhen, Guangdong 518129 (CN)
(72) Inventor: YANG, Yuchao, Beijing 100871 (CN); ZHU, Xiaoming, Shenzhen, Guangdong 518129 (CN); TAO, Yaoyu, Beijing 100871 (CN); ZHU, Yihang, Beijing 100871 (CN); DONG, Weiwei, Shenzhen, Guangdong 518129 (CN); WANG, Chengxu, Shenzhen, Guangdong 518129 (CN); TAN, Haibo, Shenzhen, Guangdong 518129 (CN)
(74) Representative: Isarpatent
(86) International application number: PCT/CN2024/090157
(87) International publication number: WO 2024/244856

(57) **Abstract**

An operator compilation method and apparatus are disclosed, to implement tensor data processing in a compute-in-memory architecture, and improve processing parallelism of computing tasks in the compute-in-memory architecture. The method includes: obtaining a compilation operator, where the compilation operator indicates a compilation rule for source code; compiling the source code based on the compilation operator, to obtain one or more tensor instructions, where the tensor instruction is used to execute a computing task in a compute-in-memory system, and the tensor instruction includes one or more of the following instruction segments: an operation code, a tensor address, a data type, a data bit width, and a tensor length; and storing the tensor instruction into an instruction storage list, where the instruction storage list is used to store a compiled tensor instruction.

## Description

This application claims priority to Chinese Patent Application No. 202310639274.4, filed with the China National Intellectual Property Administration on May 31, 2023 and entitled "DATA PROCESSING SYSTEM", and to Chinese Patent Application No. 202311070464.5, filed with the China National Intellectual Property Administration on August 22, 2023 and entitled "OPERATOR COMPILATION METHOD AND APPARATUS", both of which are incorporated herein by reference in their entireties.

### TECHNICAL FIELD

Embodiments of this application relate to the computer field, and in particular, to an operator compilation method and apparatus.

### BACKGROUND

**In** recent years, with rapid development of emerging applications such as big data, explosive growth of an information volume leads to rapid expansion of a computing scale and increasingly diversified computing forms. Diversified application scenarios pose higher requirements on computing performance and storage performance of a hardware computing system. For example, in an application scenario oriented to big data, a storage-computing separated architecture in current mainstream hardware severely restricts performance and energy efficiency improvement. During computing, a processor needs to transfer data from a memory to the processor through a data bus, and then transfer data back to the memory after data processing is completed. As a data volume increases, a delay of this process also increases, and even exceeds a read/write and processing delay of the memory and the processor. In addition, frequent transfer of a large amount of data between the memory and the processor also causes a serious transmission power consumption problem.

To solve the energy efficiency problem of data transfer in the storage-computing separated architecture, a compute-in-memory architecture emerges. The compute-in-memory architecture implements an embedded computing function in a chip of the memory to greatly reduce the scale and frequency of data transfer between the memory and the processor, thereby significantly improving computing power and energy efficiency of a computing system. However, currently, most instruction sets applied to the compute-in-memory architecture are scalar instruction sets. When processing a computing task by using the scalar instruction set, the memory needs to process scalars one by one. As a result, processing parallelism of computing tasks is low, and an advantage of the compute-in-memory architecture cannot be fully utilized.

### SUMMARY

Embodiments of this application provide an operator compilation method. In the method, a compute-in-memory system can obtain a tensor instruction set through compilation by using the operator compilation method, and execute a computing task of the compute-in-memory system by using the tensor instruction set, thereby improving processing parallelism of computing tasks. Embodiments of this application further provide a computing device, a computing device cluster, a computer-readable storage medium, and a computer program product that are corresponding to the operator compilation method.

According to a first aspect, an embodiment of this application provides an operator compilation method. The method may be performed by a compute-in-memory system, or may be performed by a component of the compute-in-memory system, for example, a processor, a chip, or a chip system of the compute-in-memory system, or may be implemented by a logic module or software that can implement all or some functions of the compute-in-memory system. The method provided in the first aspect includes: obtaining, by the compute-in-memory system, a compilation operator, where the compilation operator indicates a compilation rule for source code. The compute-in-memory system compiles the source code based on the compilation operator, to obtain one or more tensor instructions, where the tensor instruction is used to execute a computing task in the compute-in-memory system, and the tensor instruction includes one or more of the following instruction segments: an operation code, a tensor address, a data type, a data bit width, and a tensor length. The compute-in-memory system stores the tensor instruction into an instruction storage list, where the instruction storage list is used to store a compiled tensor instruction.

**In** this embodiment of this application, the compute-in-memory system can compile the source code based on the compilation operator to obtain the tensor instruction, and process a tensor in the computing task by executing the tensor instruction. Compared with a current compute-in-memory system in which an existing scalar instruction is used to process a computing task, the operator compilation method and the tensor instruction set provided in this embodiment of this application improve processing parallelism of processing computing tasks by the compute-in-memory system, thereby improving computing performance of the compute-in-memory system.

In some possible implementations, before the compute-in-memory system compiles the source code based on the compilation operator, the compute-in-memory system creates a compilation operator table, where the compilation operator table is used to store compilation information corresponding to one or more compilation operators, and the compilation information includes one or more of the following: an operator number, a row address, a column address, an output address, a data type, a data bit width, and a tensor length. In a process in which the compute-in-memory system compiles the source code based on the compilation operator, the compute-in-memory system directly queries the compilation operator table for the compilation operator and the compilation information, and generates, based on the compilation operator and the compilation information, the tensor instruction corresponding to the source code.

In this embodiment of this application, the compute-in-memory system can pre-store the compilation information in the source code into the compilation operator table, so that in a process of compiling the source code, the compute-in-memory system can quickly generate, based on the compilation operator table, a tensor instruction corresponding to source code information, thereby improving efficiency of compiling the tensor instruction.

In some possible implementations, in a process in which the compute-in-memory system generates one or more tensor instructions based on the compilation information stored in the operator compilation table, the compute-in-memory system generates an operation code of the tensor instruction based on the operator number in the compilation operator table, generates a tensor address of the tensor instruction based on the row address, the column address, and the output address that are in the compilation operator table, and generates a data type, a data bit width, and a tensor length of the tensor instruction respectively based on the data type, the data bit width, and the tensor length that are in the compilation operator table.

In this embodiment of this application, the compute-in-memory system can quickly compile and generate, based on the compilation operator table, the tensor instruction corresponding to source code, thereby improving efficiency of compiling the tensor instruction.

In some possible implementations, a type of the compilation operator includes a filter (filter) operator, a sort (sort) operator, and an aggregation (Aggregation) operator. An operator structure of the filter operator includes an operation code, a row address, a column address, an output address, an input data type, and a tensor length. An operator structure of the sort operator includes an operation code, a row address, a column address, an input data type, and a tensor length. An operator structure of the aggregation operator includes an operation code, a row address, a column address, an input data type, and a tensor length.

In this embodiment of this application, the compute-in-memory system provides a plurality of compilation operators, and the plurality of compilation operators can compile different source code to obtain tensor instructions, thereby improving richness of a tensor instruction set.

In some possible implementations, the instruction type includes one or more of the following: an address-only participation instruction, a numeric value participation instruction, a bank control instruction, and a near-memory circuit control instruction. The address-only participation instruction is an instruction type in which only a tensor address participates. The numeric value participation instruction is a tensor instruction with a numeric value. The bank control instruction is an instruction for performing a bank operation. The near-memory circuit control instruction is an instruction for performing a specified near-memory circuit operation on a bank ID.

In this embodiment of this application, the compute-in-memory system can obtain tensor instructions of different instruction types through compilation, to perform a plurality of compute-in-memory operations by using the tensor instructions of the different tensor types, thereby improving applicability of different compute-in-memory operations.

In some possible implementations, different types of tensor instructions have different instruction segments. Instruction segments of the address-only participation instruction include an operation code, a tensor address, a type, a bit width, and a tensor length. Instruction segments of the numeric value participation instruction include an operation code, a tensor address, a numeric value, a type, a bit width, and a tensor length. Instruction segments of the bank control instruction include an operation code, a tensor address, a numeric value, and a tensor length. Instruction segments of the near-memory circuit control instruction include an operation code, a memory bank identifier, a near-memory circuit type, and a near-memory circuit status.

In this embodiment of this application, the compute-in-memory system provides tensor instructions of different instruction types and instruction segment formats, thereby improving implementability of the solution.

In some possible implementations, the compute-in-memory system determines an instruction status of the tensor instruction in the instruction storage list based on an instruction association matrix and a bank status list, where the instruction association matrix is used to store a dependency between the tensor instructions, the bank status list indicates a status of a bank module, the bank module is configured to execute the tensor instruction, and the instruction status includes an executable state and a waiting state.

**In** this embodiment of this application, the compute-in-memory system can determine the instruction status of the tensor instruction based on the instruction association matrix and the bank status list, to determine an execution sequence of the tensor instruction, thereby improving computing efficiency of the compute-in-memory system.

**In** some possible implementations, when the instruction status of the tensor instruction is the executable state, the compute-in-memory system sends the tensor instruction to a memory access control unit. The compute-in-memory system determines an execution operation based on the tensor instruction, where the execution operation includes one or more of the following: a near-memory computing operation, an in-memory computing operation, and a normal read/write operation.

**In** this embodiment of this application, the tensor instruction generated by the compute-in-memory system can be applied to a plurality of compute-in-memory architectures, thereby improving applicability of the tensor instruction to the compute-in-memory system.

**In** some possible implementations, the tensor instruction includes a first tensor instruction and a second tensor instruction, the first tensor instruction and the second tensor instruction are executed in a same bank module, the compute-in-memory system simultaneously executes the first tensor instruction and the second tensor instruction respectively in different execution units of the bank module, and the execution unit includes a bank and a near-memory circuit.

**In** this embodiment of this application, different execution units of the bank module in the compute-in-memory system can simultaneously execute different tensor instructions, thereby improving parallelism of executing the tensor instructions and hardware utilization of the bank module, and further improving computing efficiency of the compute-in-memory system.

**In** some possible implementations, the dependency between the tensor instructions includes one or more of the following: a write after read dependency, a write after write dependency, and a read after write dependency. The write after read dependency means that a read operation of one instruction occurs after a write operation of another instruction in concurrent computing. The write after write dependency means that a write operation of one instruction occurs after a write operation of another instruction in concurrent computing. The read after write dependency means that a write operation of one instruction occurs after a read operation of another instruction in concurrent computing.

**In** this embodiment of this application, the instruction association matrix can store a dependency between a plurality of tensor instructions, thereby reducing an instruction conflict probability in a tensor instruction execution process, and improving computing efficiency of the compute-in-memory system.

**In** some possible implementations, the bank status list includes one or more of the following: a bank module idle status and a near-memory circuit status. The bank module idle status can indicate a bank module idle state and busy state, and the near-memory circuit status can indicate idle states of different operations in a near-memory circuit. The compute-in-memory system can collect the bank module idle status and the near-memory circuit status by using the memory access control unit, and store the bank module idle status and the near-memory circuit status into the bank status list.

**In** this embodiment of this application, the bank status list can store the bank module idle status and the near-memory circuit status, thereby improving execution efficiency of executing the tensor instruction by the compute-in-memory system.

**In** some possible implementations, the instruction storage list includes one or more of the following: an instruction segment of the tensor instruction, a tensor instruction number, a compilation operator number, and a bank block identifier.

**In** this embodiment of this application, the compute-in-memory system stores the compiled tensor instruction by using the instruction storage list, thereby improving query efficiency of the tensor instruction.

According to a second aspect, an embodiment of this application provides an operator compilation apparatus. The apparatus includes an obtaining unit, a compilation unit, and a processing unit. The obtaining unit is configured to obtain a compilation operator, where the compilation operator indicates a compilation rule for source code. The compilation unit is configured to compile the source code based on the compilation operator, to obtain one or more tensor instructions, where the tensor instruction is used to execute a computing task in the compute-in-memory system, and the tensor instruction includes one or more of the following instruction segments: an operation code, a tensor address, a data type, a data bit width, and a tensor length. The processing unit is configured to store the tensor instruction into an instruction storage list, where the instruction storage list is used to store a compiled tensor instruction.

**In** some possible implementations, the processing unit is further configured to create a compilation operator table, where the compilation operator table is used to store compilation information corresponding to one or more compilation operators, and the compilation information includes one or more of the following: an operator number, a row address, a column address, an output address, a data type, a data bit width, and a tensor length; and the compilation unit is specifically configured to generate one or more tensor instructions based on the compilation information stored in the compilation operator table.

In some possible implementations, the compilation unit is specifically configured to: generate an operation code of the tensor instruction based on the operator number in the compilation operator table, generate a tensor address of the tensor instruction based on the row address, the column address, and the output address that are in the compilation operator table, and generate a data type, a data bit width, and a tensor length of the tensor instruction respectively based on the data type, the data bit width, and the tensor length that are in the compilation operator table.

In some possible implementations, the instruction type includes one or more of the following: an address-only participation instruction, a numeric value participation instruction, a bank control instruction, and a near-memory circuit control instruction.

In some possible implementations, the compilation unit is further configured to determine an instruction status of the tensor instruction in the instruction storage list based on an instruction association matrix and a bank status list, where the instruction association matrix is used to store a dependency between the tensor instructions, the bank status list indicates a status of a bank module, the bank module is configured to execute the tensor instruction, and the instruction status includes an executable state and a waiting state.

In some possible implementations, the processing unit is further configured to: when the instruction status of the tensor instruction is the executable state, send the tensor instruction to a memory access control unit; and determine an execution operation based on the tensor instruction, where the execution operation includes one or more of the following: a near-memory computing operation, an in-memory computing operation, and a normal read/write operation.

In some possible implementations, the tensor instruction includes a first tensor instruction and a second tensor instruction, the first tensor instruction and the second tensor instruction are executed in a same bank module, the processing unit is further configured to simultaneously execute the first tensor instruction and the second tensor instruction respectively in different execution units of the bank module, and the execution unit includes a bank and a near-memory circuit.

In some possible implementations, the dependency between the tensor instructions includes one or more of the following: a write after read dependency, a write after write dependency, and a read after write dependency.

In some possible implementations, the bank status list includes one or more of the following: a bank module idle status and a near-memory circuit status.

In some possible implementations, the instruction storage list includes one or more of the following: an instruction segment of the tensor instruction, a tensor instruction number, a compilation operator number, and a bank block identifier.

According to a third aspect, an embodiment of this application provides a computing device, where the computing device includes a processor, the processor is coupled to a memory, the processor is configured to store instructions, and when the instructions are executed by the processor, the computing device is enabled to perform the method according to any one of the first aspect or the possible implementations of the first aspect.

According to a fourth aspect, an embodiment of this application provides a computing device cluster. The computing device cluster includes one or more computing devices. The computing device includes a processor, the processor is coupled to a memory, and the processor is configured to store instructions. When the instructions are executed by the processor, the computing device cluster is enabled to perform the method according to any one of the first aspect or the possible implementations of the first aspect.

According to a fifth aspect, an embodiment of this application provides a computer-readable storage medium. The computer-readable storage medium stores instructions. When the instructions are executed, a computer is enabled to perform the method according to any one of the first aspect or the possible implementations of the first aspect.

According to a sixth aspect, an embodiment of this application provides a computer program product. The computer program product includes instructions. When the instructions are executed, a computer is enabled to implement the method according to any one of the first aspect or the possible implementations of the first aspect.

**It** may be understood that, for beneficial effects that can be achieved by any one of the operator compilation apparatus, the computing device, the computing device cluster, the computer-readable medium, the computer program product, or the like provided above, refer to beneficial effects in the corresponding method. Details are not described herein again.

### BRIEF DESCRIPTION OF DRAWINGS

FIG. 1 is a diagram of a system architecture of a compute-in-memory system according to an embodiment of this application;
FIG. 2 is a schematic flowchart of an operator compilation method according to an embodiment of this application;
FIG. 3 is a schematic flowchart of executing a tensor instruction according to an embodiment of this application;
FIG. 4 is a diagram of a compilation operator table according to an embodiment of this application;
FIG. 5 is a diagram of generating a tensor instruction based on a compilation operator according to an embodiment of this application;
FIG. 6 is a diagram of a tensor instruction according to an embodiment of this application;
FIG. 7 is another diagram of generating a tensor instruction based on a compilation operator according to an embodiment of this application;
FIG. 8 is a diagram of an instruction storage list according to an embodiment of this application;
FIG. 9 is a diagram of an instruction association matrix according to an embodiment of this application;
FIG. 10 is a diagram of a bank status list according to an embodiment of this application;
FIG. 11 is a schematic flowchart of executing a tensor instruction according to an embodiment of this application;
FIG. 12 is a diagram of execution statuses of different execution units in a compute-in-memory module according to an embodiment of this application;
FIG. 13 is a diagram of a structure of an operator compilation apparatus according to an embodiment of this application;
FIG. 14 is a diagram of a structure of a computing device according to an embodiment of this application; and
FIG. 15 is a diagram of a structure of a computing device cluster according to an embodiment of this application.

### DESCRIPTION OF EMBODIMENTS

Embodiments of this application provide an operator compilation method and apparatus, to improve processing parallelism of computing tasks in a compute-in-memory system.

**In** the specification, claims, and accompanying drawings of this application, the terms "first", "second", "third", "fourth", and so on (if existent) are intended to distinguish between similar objects but do not necessarily indicate a specific order or sequence. It should be understood that the data used in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

First, some terms in embodiments of this application are described, to help a person skilled in the art understand the technical solutions.

A compute-in-memory architecture is a technical architecture that integrates storage and computing functions. The compute-in-memory architecture implements an embedded computing function in a chip of a memory to reduce the scale and frequency of data transfer between the memory and a processor, thereby improving system computing power and energy efficiency.

Near-memory computing means that a physical distance between a memory and a logic processing module is shortened, so that a delay and power consumption of data transmission are reduced.

In-memory computing is to perform operations in a memory to eliminate possible data transmission and reduce a delay and power consumption of a system.

Out-of-order execution (out-of-order execution, OOE) is applied to a high-performance microprocessor to use an instruction cycle to avoid a specific type of latency consumption. During out-of-order execution, the processor can determine an instruction execution sequence based on availability of input data. In this manner, waiting of the processor caused by obtaining a next program instruction can be avoided, and a next instruction that can be immediately executed can be processed.

To make the technical solutions of this application clearer and easier to understand, the following describes a system architecture in this application with reference to the accompanying drawings.

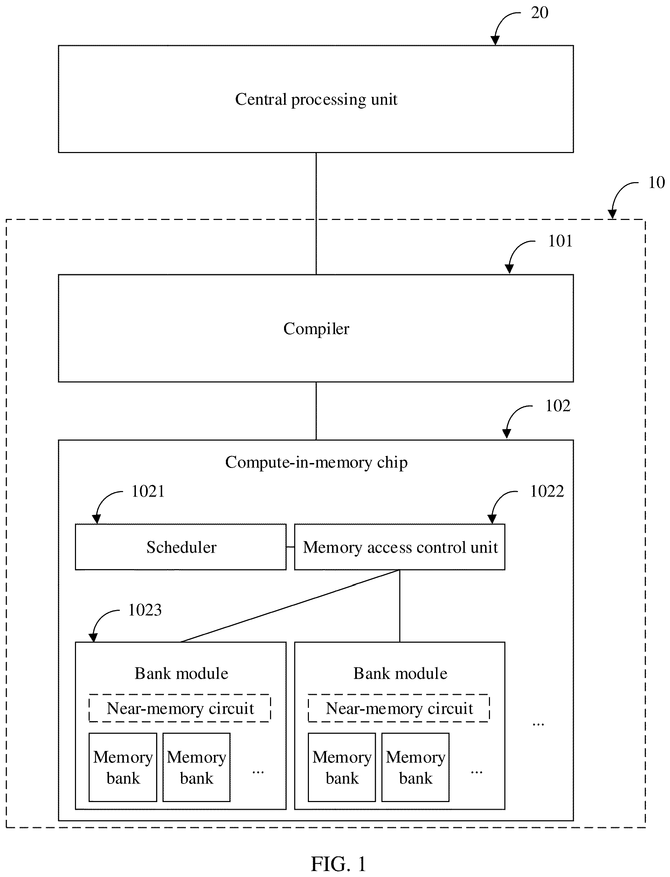

FIG. 1 is a diagram of a system architecture of a compute-in-memory system according to an embodiment of this application. In an example shown in FIG. 1, a compute-in-memory system 10 receives a compute-in-memory task delivered by a central processing unit 20. The compute-in-memory task is, for example, a big data analysis task, a machine learning task, an image processing task, a multimedia encoding and decoding task, and a database query and storage task. The compute-in-memory system 10 is configured to execute a compute-in-memory computing task. In the compute-in-memory system, a compute-in-memory task and a computing task are not distinguished in this embodiment of this application.

As shown in FIG. 1, the compute-in-memory system 10 includes a compiler 101 and a compute-in-memory chip 102. The compute-in-memory chip 102 includes a scheduler 1021, a memory access controller unit 1022, and a bank module 1023. The following separately describes in detail the compiler 101 and the compute-in-memory chip 102.

The compiler 101 is configured to receive a compute-in-memory task sent by the central processing unit 20, and compile source code corresponding to the compute-in-memory task into an instruction, where an instruction format of the instruction is an instruction format that can be directly executed by the compute-in-memory chip 102. One or more instructions obtained by the compiler 101 through compilation may form an instruction set. Because the compute-in-memory system 10 can perform tensor computing on the compute-in-memory chip 102 by using the instruction set, the instruction set may also be referred to as a compute-in-memory instruction set or a tensor instruction set. The compiler 101 is further configured to send a compiled tensor instruction set to the compute-in-memory chip 102, so that the compute-in-memory chip 102 stores and executes the tensor instruction set.

The compute-in-memory chip 102 is configured to implement processing of the compute-in-memory task in the chip. Specifically, the compute-in-memory chip 102 is configured to execute the tensor instruction set compiled by the compiler 101, and complete, by executing the tensor instruction set, the compute-in-memory task delivered by the central processing unit 20. The compute-in-memory chip 102 includes the scheduler 1021, the memory access controller unit 1022, and the bank module 1023. The following separately describes specific functions of these parts.

The scheduler 1021 is configured to receive the tensor instruction set compiled by the compiler 101, and store the tensor instruction set into an instruction storage list. The scheduler 1021 is further configured to determine an instruction status of the tensor instruction based on an instruction association matrix and a bank status list. When the instruction status is an executable state, the scheduler 1021 schedules the memory access control unit 1022 to execute the tensor instruction.

The memory access control unit 1022 is configured to specifically execute the tensor instruction. Specifically, the memory access control unit 1022 is configured to generate, based on the tensor instruction, a circuit control signal corresponding to the bank module 1023, and control, by using the circuit control signal, the bank module 1023 to perform operations such as storage and computing. The memory access control unit 1022 may control one or more bank modules 1023 to perform operations such as storage and computing.

The bank module 1023 is configured to execute the compute-in-memory task. Specifically, the bank module 1023 includes a near-memory circuit and a memory bank. The near-memory circuit is configured to perform a near-memory computing operation, and store data obtained after the near-memory computing operation into the memory bank by using a cache. The memory bank is configured to perform a data read/write operation. In addition, the memory bank is further configured to perform an in-memory computing operation, and store a result of the in-memory computing operation into the memory bank by using a cache.

Based on the compute-in-memory system 10 shown in FIG. 1, this application further provides an operator compilation method. The following describes the operator compilation method in this application with reference to embodiments.

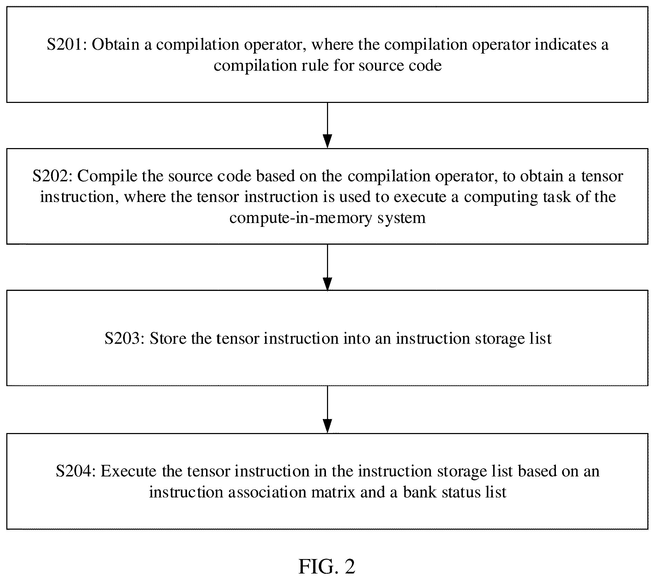

FIG. 2 is a schematic flowchart of an operator compilation method according to an embodiment of this application. In an example shown in FIG. 2, the method includes the following steps:
S201: A compute-in-memory system obtains a compilation operator.

A compute-in-memory system 10 receives a compilation operator sent by a central processing unit 20, where the compilation operator indicates a compilation rule of a compiler 101 for source code. Specifically, the compiler 101 may perform lexical analysis, syntax analysis, code optimization, and the like on the source code based on the compilation operator. The compute-in-memory system 10 may further receive source code corresponding to a compute-in-memory task sent by the central processing unit 20, and the compiler 101 can analyze and convert the source code based on the compilation operator, to generate a specific instruction that can be executed by the compute-in-memory system 10.

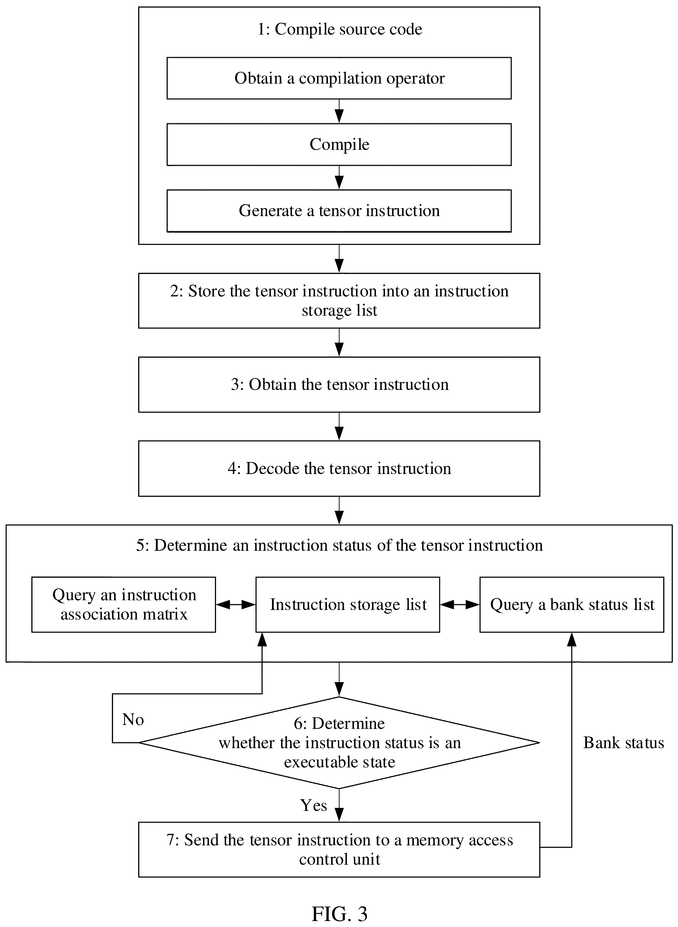

FIG. 3 is a schematic flowchart of executing a tensor instruction according to an embodiment of this application. In step 1 of an example shown in FIG. 3, the compute-in-memory system 10 receives the compilation operator sent by the central processing unit 20, and compiles the source code based on the compilation operator. For example, the compilation operator received by the compute-in-memory system 10 is a filter operator, and the filter operator may select, from a data set based on a specific condition, an element that meets the condition, and return the element as a new subset.

S202: The compute-in-memory system compiles the source code based on the compilation operator, to obtain a tensor instruction, where the tensor instruction is used to execute a computing task of the compute-in-memory system.

After obtaining the source code, the compute-in-memory system 10 first creates a compilation operator table, where the compilation operator table is used to store compilation information corresponding to one or more compilation operators, and the compilation information includes one or more of the following: an operator number, a row address, a column address, an output address, a data type, a data bit width, and a tensor length. The compute-in-memory system 10 stores compilation information in the source code into the compilation operator table based on a table structure of the compilation operator table.

In the compilation operator table, a row address is an address of a tensor after a conditional statement in one piece of source code, and a column address is an initial address of a tensor in one piece of source code, and is also referred to as a to-be-queried initial address. An operator number is identifiers corresponding to different compilation operators. A bit width is a quantity of address bits occupied by one piece of source code. The following describes the compilation operator table provided in this embodiment of this application by using an example.

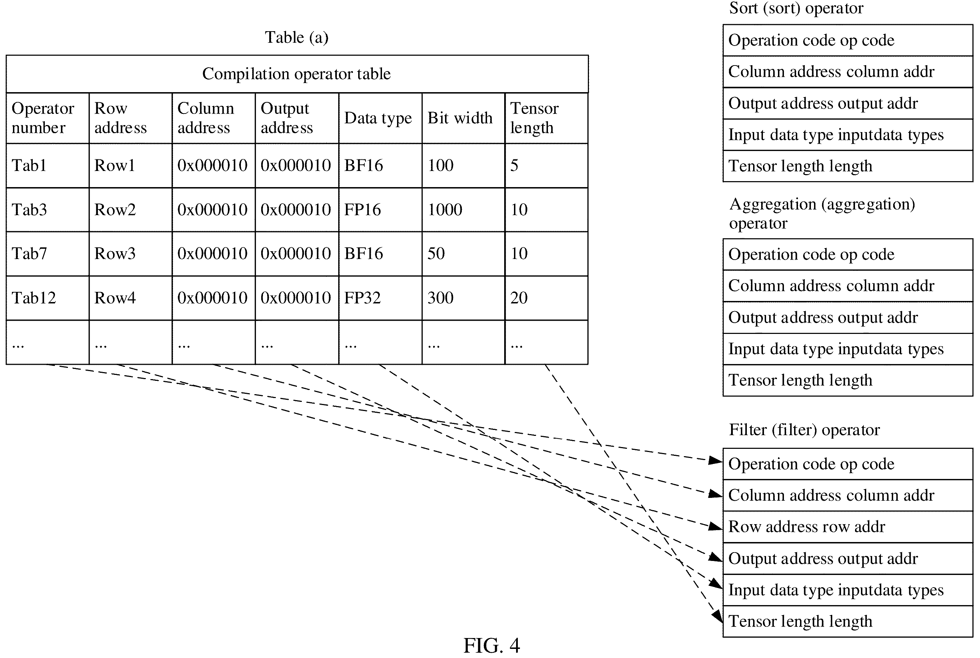

FIG. 4 is a diagram of compiling source code based on a compilation operator table according to an embodiment of this application. In an example shown in FIG. 4, table (a) is a compilation operator table created by the compute-in-memory system 10, and entries of the compilation operator table include an operator number, a row address, a column address, an output address, a data type, a data bit width, and a tensor length.

The row address is an address of a tensor after a conditional statement in one piece of source code. For example, for source code "A(A==B)→C", it indicates determining whether A is equal to B, and if A is equal to B, a comparison result is transferred to C. A conditional statement is "determining whether A is equal to B". Therefore, a tensor address after the conditional statement is an address of a tensor B. Therefore, the compute-in-memory system 10 stores the address of the tensor B as a row address into the compilation operator table.

In the example shown in FIG. 4, the column address is an initial address of a tensor in one piece of source code, and is also referred to as a to-be-queried initial address. For another example, in the source code "A(A==B)→C", an initial address of a tensor in the source code is an address of a tensor A. Therefore, the compute-in-memory system 10 stores the address of the tensor A as a column address into the compilation operator table.

In the example shown in FIG. 4, the operator number is numbers corresponding to different compilation operators. For example, in the source code "A(A==B)→C", the source code is a comparison operation, a compilation operator corresponding to the source code is a filter (filter) operator, and an operator number corresponding to the filter operator is "tab1". Therefore, the compute-in-memory system 10 stores "tab1" into the compilation operator table.

In the example shown in FIG. 4, the bit width is a quantity of address bits occupied by one piece of source code. For example, a quantity of address bits occupied by the source code "A(A==B)→C" is 100 bits. Therefore, the compute-in-memory system 10 stores "100" into the compilation operator table.

It may be understood that the compilation operator table created by the compute-in-memory system 10 may store one or more compilation operators in the source code and compilation information corresponding to the compilation operator. Therefore, the compute-in-memory system 10 may establish a mapping relationship between an operator number and compilation information, to quickly query the compilation operator table in a source code compilation process, and determine content of an instruction segment of a tensor instruction.

The following continues to describe a process of compiling the source code based on the compilation operator table after the compute-in-memory system 10 creates the compilation operator table.

In a process in which the compute-in-memory system 10 generates, based on the compilation operator and the compilation operator table, the tensor instruction corresponding to the source code, the compute-in-memory system 10 first determines each instruction segment of the tensor instruction based on an operator structure of the compilation operator, and determines specific content of each instruction segment based on compilation information corresponding to the operator structure. Specifically, the compilation information in the compilation operator table is queried based on the operator number of the compilation operator, and compilation information to be filled in a corresponding instruction segment is determined, to generate content of each instruction segment of the tensor instruction, to obtain the tensor instruction. The following describes a compilation process of the source code by using an example.

Still refer to FIG. 4. In the example shown in FIG. 4, the compute-in-memory system 10 determines each instruction segment of the tensor instruction based on the operator structure of the compilation operator, where different compilation operators have different operator structures. For example, an operator structure of the filter operator includes an operation code, a row address, a column address, an output address, an input data type, and a tensor length. The compute-in-memory system 10 determines each instruction segment of the tensor instruction based on the filter operator. Instruction segments of a tensor instruction corresponding to the filter operator include an operation code, an address of a variable A, an address of a variable B, an address of a variable C, a type, a bit width, and a tensor length. The address of the variable A corresponds to the row address of the operator structure, the address of the variable B corresponds to the address of the operator structure, the address of the variable C corresponds to the output address of the operator structure, and the type corresponds to the input data type of the operator structure.

In the example shown in 4, in a process in which the compute-in-memory system 10 generates the tensor instruction based on the compilation operator, the compilation operator table is queried for a corresponding row address, column address, output address, data type, and tensor length based on the operator number of the filter operator, and the found row address, column address, output address, data type, and tensor length are used as content of corresponding instruction segments of the tensor instruction. For example, the operator number of the filter operator is "tab1", and the compute-in-memory system 10 finds, through query based on "tab1", that the row address in the compilation operator table is "row1" and the column address is "0x000010". In this way, the compute-in-memory system 10 can obtain the address of the variable A and the address of the variable B in the instruction segments of the tensor instruction. The compute-in-memory system 10 may further compile the source code based on another operator structure of the filter operator, to obtain a complete tensor instruction.

In this embodiment of this application, the operator structure of the compilation operator includes one or more of the following: an operation code, a row address, a column address, an output address, an input data type, and a tensor length. Different compilation operator types correspond to different operator structures. The compilation operator types are, for example, a filter (filter) operator, a sort (sort) operator, and an aggregation (Aggregation) operator. An operator structure of the filter operator includes an operation code, a row address, a column address, an output address, an input data type, and a tensor length. An operator structure of the sort operator includes an operation code, a row address, a column address, an input data type, and a tensor length. An operator structure of the aggregation operator includes an operation code, a row address, a column address, an input data type, and a tensor length.

In this embodiment of this application, a mapping relationship exists between the operator structure of the compilation operator and the instruction segment of the tensor instruction. For example, the instruction segment of the tensor instruction includes one or more of: an operation code, the address of the variable A, the address of the variable B, the address of the variable C, a type, a bit width, and a tensor length. The operation code, the row address, the column address, the output address, the input data type, and the tensor length in the operator structure respectively correspond to the operation code, the address of the variable A, the address of the variable B, the address of the variable C, the type, and the tensor length in the instruction segments.

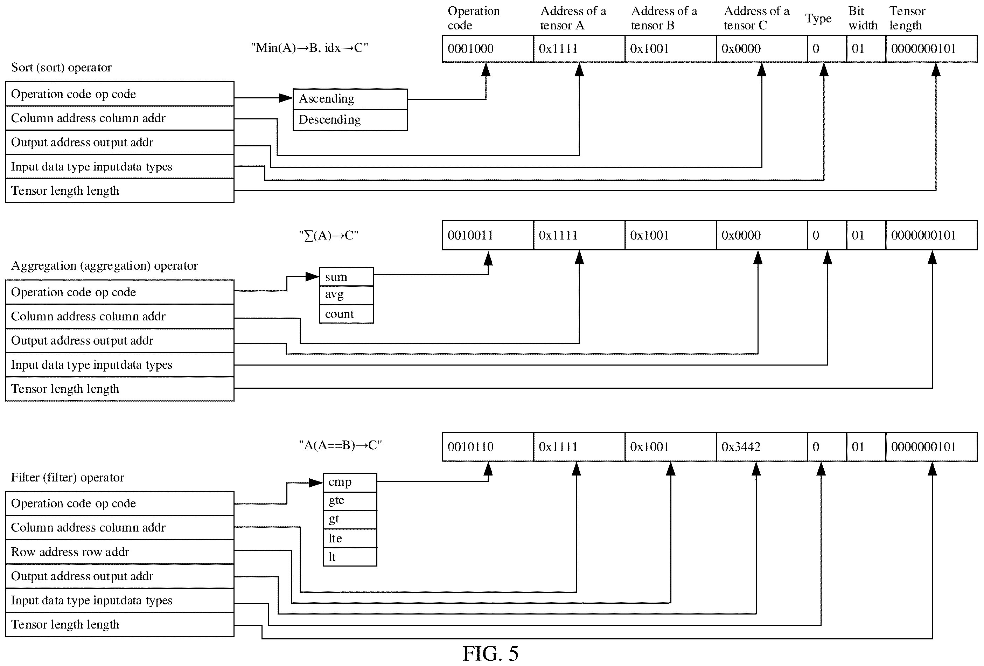

FIG. 5 is a diagram of determining an instruction segment of a tensor instruction based on an operator structure of a compilation operator according to an embodiment of this application. In an example shown in FIG. 5, the compute-in-memory system 10 generates a corresponding tensor instruction based on operator structures of a filter operator, a sort operator, and an aggregation operator.

In the example shown in FIG. 5, the filter operator is used as an example. The operator structure of the filter operator includes an operation code, a row address, a column address, an output address, an input data type, and a tensor length. The compute-in-memory system 10 determines a tensor address by querying the compilation operator table based on the operator structure of the filter operator, and further performs compilation to obtain the operation code, the address of the variable A, the address of the variable B, the address of the variable C, the type, the bit width, and the tensor length of the instruction segments of the tensor instruction.

For example, the operation code of the tensor instruction may be determined as a comparison operation based on source code "A(A==B)-C", a corresponding operation code is "0010110", and the address of the variable A may be determined as "0x1111" by querying the column address of the compilation operator table. The address of variable B may be determined as "0x1001" by querying the row address of the compilation operator table. The address of the variable C, the type, the bit width, and the tensor length may be respectively determined as "0x3442", "0", "01", and "000000101" based on the source code and the operator structure of the compilation operator.

In this embodiment of this application, one compilation operator may correspond to one or different instruction operation codes. For example, in the example shown in FIG. 4, the filter operator includes operation codes such as compare (compare, cmp), greater than or equal (greater than or equal, gte), greater than (greater than, gt), less than or equal (less than or equal, gt), and less than (Less Than, lt); the sort operator includes operation codes such as ascending (ascending) and descending (descending); and the aggregation operator includes operation codes such as sum (sum), average (avg), and count (count).

In this embodiment of this application, different types of tensor instructions have different instruction segments. The instruction type of the tensor instruction includes one or more of the following types: an address-only participation instruction, a numeric value participation instruction, a bank control instruction, and a near-memory circuit control instruction. The following describes in detail instruction segments corresponding to these instruction types.

The address-only participation instruction is an instruction type in which only a tensor address participates. The address-only participation instruction is, for example, respectively reading A and B from the address of the tensor A and the address of the tensor B, performing a specified operation, and then writing a result C to the address of the tensor C. An instruction segment of the address-only participation instruction includes one or more of the following: an operation code, a tensor address, a type, a bit width, and a tensor length. The tensor address may be addresses of a plurality of tensors, and the tensor length is a quantity of elements included in the tensor.

The numeric value participation instruction is a tensor instruction with a numeric value. The numeric value participation instruction is, for example, reading A from the address of the tensor A, performing a specified operation in combination with a numeric value C, and writing a result B to the address of the tensor B. An instruction segment of the numeric value participation instruction includes one or more of the following: an operation code, a tensor address, a numeric value, a type, a bit width, and a tensor length.

The bank control instruction is an instruction for performing a bank operation. The bank control instruction is, for example, reading A from the address of the tensor A, performing a specified operation in combination with a numeric value C, and performing a control operation on a bank corresponding to the address of the tensor A. An instruction segment of the bank control instruction includes one or more of the following: an operation code, a tensor address, a numeric value, and a tensor length.

The near-memory circuit control instruction is an instruction for performing a specified near-memory circuit operation on a bank ID. The near-memory circuit control instruction is specifically determined by a near-memory circuit type and a near-memory circuit status in an instruction. An instruction segment of the near-memory circuit control instruction includes one or more of the following: an operation code, a memory bank ID, a near-memory circuit type, and a near-memory circuit status.

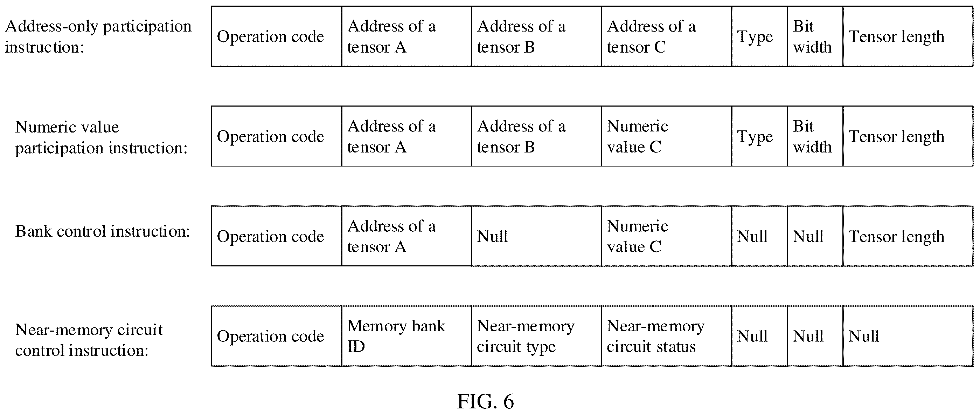

FIG. 6 is a diagram of instruction segments of tensor instructions of different instruction types according to an embodiment of this application. In an example shown in FIG. 6, instruction segments of an address-only participation instruction include an operation code, an address of a tensor A, an address of a tensor B, an address of a tensor C, a type, a bit width, and a tensor length. Instruction segments of a numeric value participation instruction include an operation code, the address of the tensor A, the address of the tensor B, a numeric value C, a type, a bit width, and a tensor length. Instruction segments of a bank control instruction include an operation code, the address of the tensor A, the numeric value C, and a tensor length. Instruction segments of a near-memory circuit control instruction include an operation code, a memory bank ID, a near-memory circuit type, and a near-memory circuit status.

It can be learned from the example shown in FIG. 6 that, when a type corresponding to an instruction does not need a part of instruction segments, an address or a numeric value corresponding to this part of instruction segments may be set to 0 to indicate skipping. In the foregoing instruction segments, in addition to the tensor address and the numeric value, there are instruction segments of the type, the bit width, and the tensor length. The type includes an integer number and a floating point number. The integer number includes a number of 1 bit to 16 bits. The floating point number includes BF16, FP16, FP32, FP64, and the like. The tensor length is used to identify an extended address length of the tensor address. When the tensor length is 1, it indicates that tensor data is equal to scalar data.

It should be noted that, when the compute-in-memory system 10 compiles the source code based on the compilation operator, one piece of source code may be compiled based on different compilation operators to obtain one or more tensor instructions. An example is given for illustration with reference to the accompanying drawing in the following.

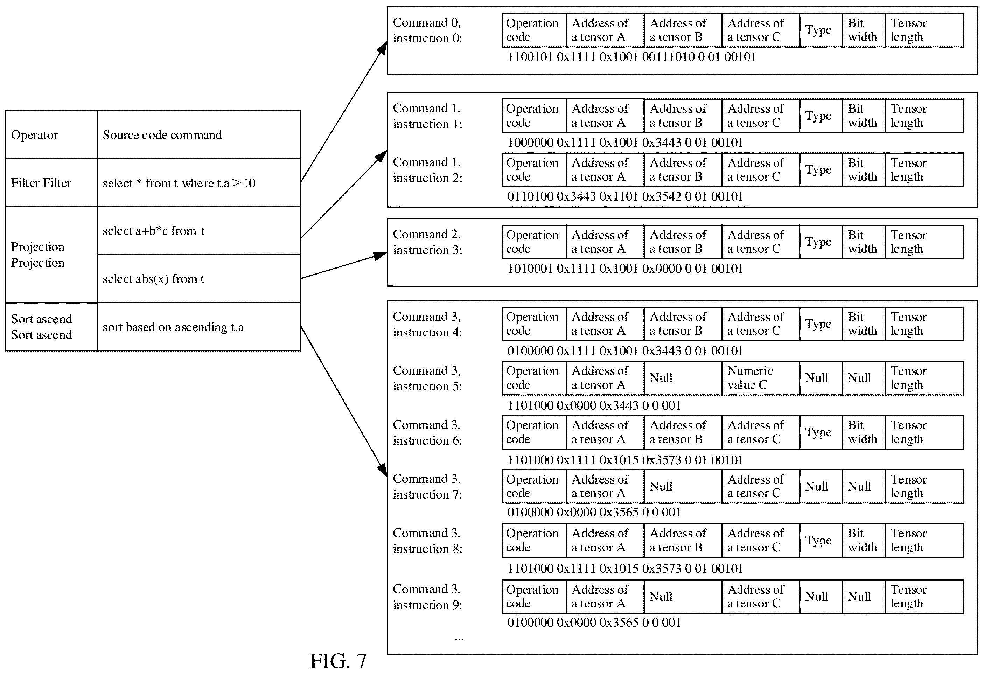

FIG. 7 is a diagram of obtaining a tensor instruction through compilation based on a compilation operator according to an embodiment of this application. In an example shown in FIG. 7, the compute-in-memory system 10 obtains one or more tensor instructions through compilation based on a single compilation operator. For example, the compute-in-memory system 10 obtains one tensor instruction, that is, a tensor instruction 0, by compiling "select * from t where t.a>10" based on a filter operator. For another example, the compute-in-memory system 10 obtains two tensor instructions, that is, a tensor instruction 1 and a tensor instruction 2, by compiling "select a+b*c from t" based on a projection (Projection) operator.

In the example shown in FIG. 7, a single source code command may be compiled into a single tensor instruction or a combination of a plurality of tensor instructions. For example, three operators in the table correspond to different source code commands, the filter operator is used to sequentially obtain a number greater than 10, the projection operator is used to compute |a+b*c|, and a sort ascend operator is used to sort in ascending order. The filter operator corresponds to a command 1, the projection operator corresponds to commands 1 and 2, and the sort ascend operator corresponds to a command 3. The command 0 and the command 2 may be implemented by using a single instruction. The command 1 and the command 3 both need to be implemented by using a plurality of instructions.

S203: The compute-in-memory system stores the tensor instruction into an instruction storage list.

After obtaining the tensor through compilation, the compute-in-memory system 10 stores the tensor instruction into the instruction storage list. The instruction storage list includes one or more of the following: an instruction segment of the tensor instruction, a tensor instruction number, a compilation operator number, and a bank block identifier. The following specifically describes the instruction storage list.

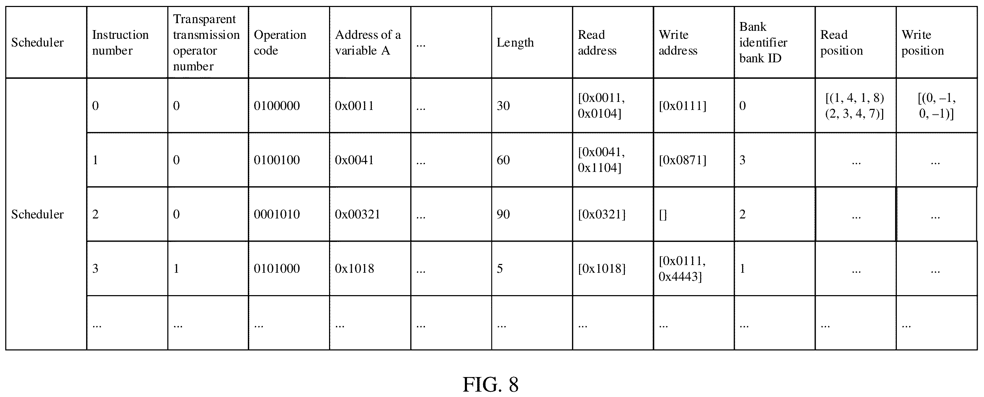

FIG. 8 is a diagram of an instruction storage list according to an embodiment of this application. In an example shown in FIG. 8, tensor instructions are stored into the instruction storage list in a sequence of generating the tensor instructions by the compute-in-memory system 10, and an instruction that is first stored into the instruction storage list is preferentially executed. In addition to storing instruction segments of the tensor instruction, the instruction storage list further stores a tensor instruction number of the tensor instruction, a compilation operator number, read and write addresses, a bank block identifier, and read and write coordinate positions.

For example, instruction segments of a tensor instruction whose instruction number is "0" and whose compilation operator number is "0" are stored into the instruction storage list, read and write addresses of the tensor instruction are respectively "[0x0011, 0x0104]" and "0x0111]", a bank block identifier of a memory bank on which the tensor instruction is operated is "0", and read and write coordinate positions of the memory bank on which the tensor instruction is operated are respectively "[(1, 4, 1, 8), (2, 3, 4, 7)]" and "[(0, - 1, 0, -1)]".

Still refer to FIG. 3. In step 2 of the example shown in FIG. 3, after compiling the source code based on the compilation operator to generate the tensor instruction, the compute-in-memory system 10 stores the tensor instruction into the instruction storage list.

S204: The compute-in-memory system executes the tensor instruction in the instruction storage list based on an instruction association matrix and a bank status list.

The compute-in-memory system 10 executes the tensor instruction in the instruction storage list based on the instruction association matrix and the bank status list. Specifically, the compute-in-memory system 10 determines an instruction status of the tensor instruction in the instruction storage list based on the instruction association matrix and the bank status list, where the instruction status includes an executable state and a waiting state. The instruction association matrix is used to store a dependency between tensor instructions, the bank status list indicates a status of a bank module, and the bank module is used to execute the tensor instruction.

Still refer to FIG. 3. In step 2 to step 7 in the example shown in FIG. 3, after obtaining the compiled tensor instruction, the compute-in-memory system 10 decodes the tensor instruction, and stores a decoded tensor instruction into the instruction storage list. The compute-in-memory system 10 determines, based on the instruction association matrix and the bank status list, whether the tensor instruction can be executed. If the tensor instruction can be executed, the tensor instruction is sent to the memory access control unit. If the tensor instruction cannot be executed, the tensor instruction continues to wait for execution in the instruction storage list.

The following specifically describes the instruction association matrix and the bank status list.

**In** this embodiment of this application, the instruction association matrix is used to store an association relationship between instructions in the instruction storage list. The instruction association matrix is a matrix whose length and width are the same as a quantity of tensor instructions in the instruction storage list, and a matrix element represents an instruction dependency. The dependency between the tensor instructions includes one or more of the following: a write after read dependency, a write after write dependency, and a read after write dependency.

The write after read dependency means that a read operation of one instruction occurs after a write operation of another instruction in concurrent computing. To be specific, one instruction can read shared data only after another instruction completes writing of the shared data. The write after write dependency means that a write operation of one instruction occurs after a write operation of another instruction in concurrent computing. To be specific, one instruction can modify shared data only after another instruction completes writing of the shared data. The read after write dependency means that a write operation of one instruction occurs after a read operation of another instruction in concurrent computing. To be specific, one instruction can modify shared data only after another instruction completes reading of the shared data.

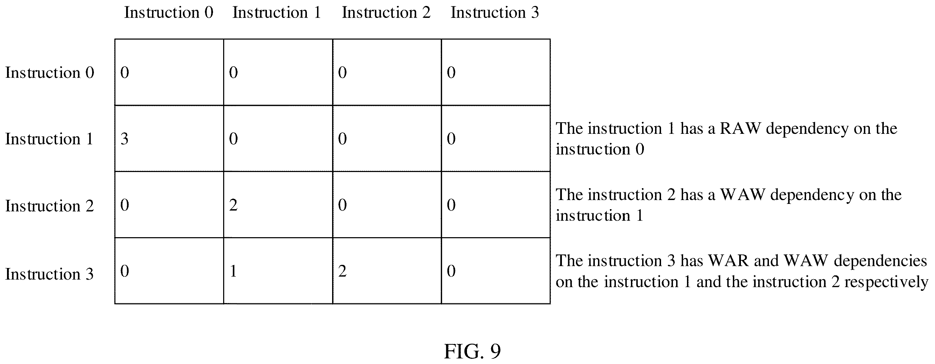

FIG. 9 is a diagram of an instruction association matrix according to an embodiment of this application. In an example shown in FIG. 9, a value of (i, j) in a matrix element in the instruction association matrix represents a conflict relationship between an i^{th} instruction and a j^{th} instruction, where 0 indicates that there is no address conflict between the i^{th} instruction and the j^{th} instruction, 1 indicates a read after write (write after read, WAR) dependency, 2 indicates a write after write (write after write, WAW) dependency, and 3 indicates a write after read (read after write, RAW) dependency. For example, an instruction 1 has a write after read dependency on an instruction 0, an instruction 2 has a write after write dependency on the instruction 1, an instruction 3 has a read after write dependency on the instruction 1, and the instruction 3 has a write after write dependency on the instruction 2.

In this embodiment of this application, the bank status list is used to query a status of a memory bank and a status of a near-memory circuit, to determine whether the tensor instruction can be sent to a corresponding memory bank or near-memory circuit for execution. The bank status list includes one or more of the following: a bank module idle status and a near-memory circuit status.

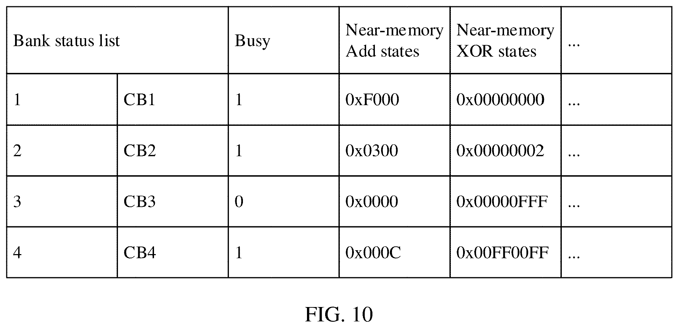

FIG. 10 is a diagram of a bank status list according to an embodiment of this application. In the bank status list shown in FIG. 10, the bank status list displays statuses of four memory banks whose numbers are respectively "CB1", "CB3", "CB3", and "CB4", where a bank state "1" indicates that the bank is in a busy state, and a bank state "0" indicates that the bank is in an idle state. The bank status list may further record a status of a near-memory circuit. For example, the bank status list can further record a status of an adder in the near-memory circuit or a status of an exclusive OR operator in the near-memory circuit.

The compute-in-memory system 10 determines the instruction status of the tensor instruction in the instruction storage list based on the instruction association matrix and the bank status list. Specifically, when a to-be-executed tensor instruction meets a dependency of the instruction association matrix, and a memory bank or a near-memory circuit on which the tensor instruction is operated is in an idle state, an instruction status of the tensor instruction is an executable state. In this embodiment of this application, a manner in which the compute-in-memory system 10 sends the tensor instruction to the memory access control unit based on the instruction status of the tensor instruction is also referred to as out-of-order execution.

When the instruction status of the tensor instruction is the executable state, the tensor instruction is sent to the memory access control unit. The compute-in-memory system 10 determines an execution operation based on the tensor instruction, where the execution operation includes one or more of the following: a near-memory computing operation, an in-memory computing operation, and a normal read/write operation. The near-memory computing operation is an operation of reading required data by using a bank or a cache, and then invoking a corresponding near-memory circuit to complete computing. The in-memory computing operation is computing performed by directly using a memory bank. The normal read/write operation is a read/write operation performed on a memory bank. In the foregoing different compute-in-memory types, the tensor instructions have different computing parallelism.

The following describes, with reference to an example, several operations of executing the tensor instruction by the compute-in-memory system 10.

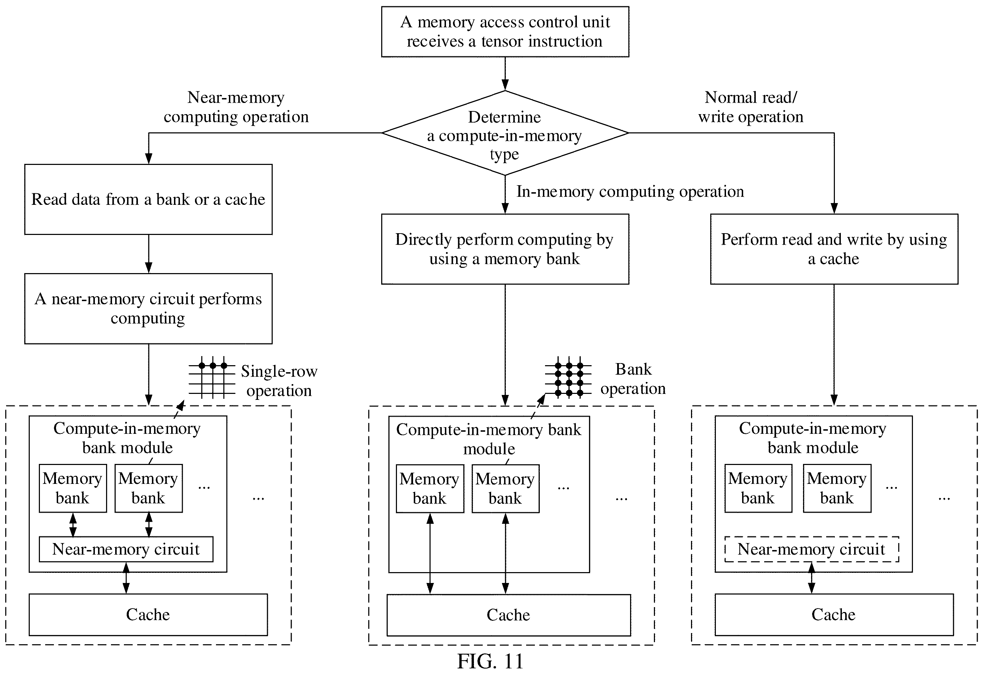

FIG. 11 is a diagram of performing a compute-in-memory operation by a memory access control unit according to an embodiment of this application. In an example shown in FIG. 11, after receiving a tensor instruction, the memory access control unit 1022 generates a circuit control signal corresponding to a compute-in-memory bank model group 1023, and the compute-in-memory bank model group 1023 determines a compute-in-memory operation type based on the control circuit signal.

In the example shown in FIG. 11, when the compute-in-memory operation type is a near-memory computing operation, the bank module 1023 reads required data by using a bank or a cache, and then invokes a corresponding near-memory circuit to complete a computing operation. In a near-memory computing process, the bank module 1023 in the compute-in-memory chip 102 performs single-row bank reading, and then transmits read data to the near-memory circuit by using a cache.

In the example shown in FIG. 11, when the compute-in-memory operation type is an in-memory computing operation, the bank module 1023 performs a computing operation by directly using a memory bank, for example, performs multi-row bank multiply-accumulate and multiply-add operation in the memory bank, and writes a computing result into the memory bank by using a cache. When the compute-in-memory operation type is a normal read/write operation, the bank module 1023 performs a read/write operation on data in each data unit in the memory bank, and transmits data by using a cache.

In this embodiment of this application, the first tensor instruction and the second tensor instruction are executed simultaneously in different execution units of the bank module 1023 respectively. The different execution units each include a bank and a near-memory circuit, and the first tensor instruction and the second tensor instruction are different tensor instructions. The following provides a description with reference to an example.

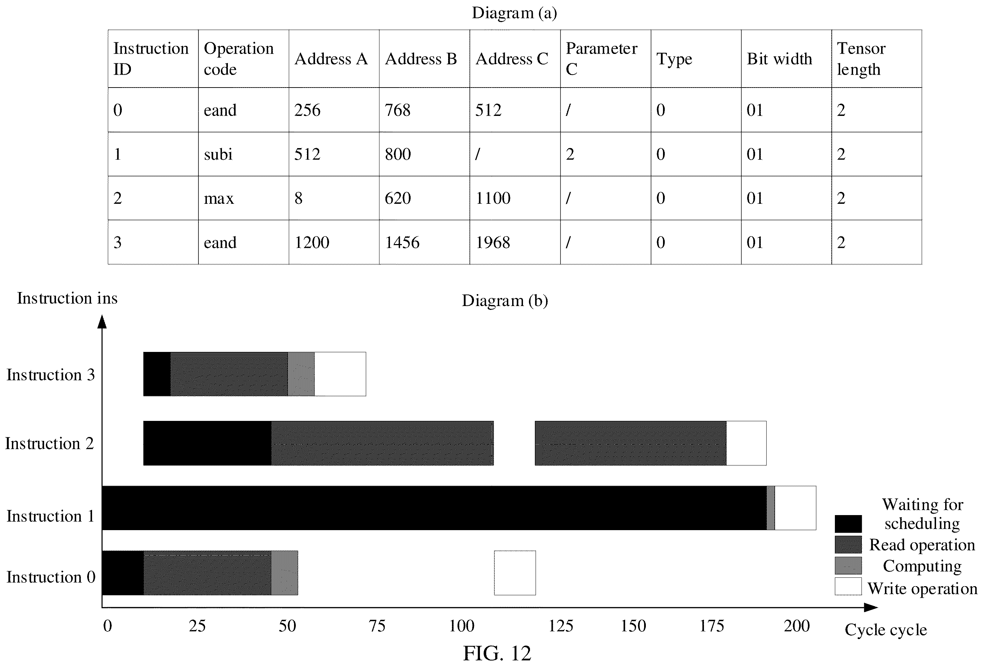

FIG. 12 is a diagram of executing different tensor instructions in a compute-in-memory bank model according to an embodiment of this application. In an example shown in FIG. 12, diagram (a) is a diagram of four different tensor instructions, and diagram (b) is a diagram of execution statuses of different tensor instructions at different time. In the four tensor instructions shown in diagram (a), an instruction 0, an instruction 1, and an instruction 2 are all distributed in one bank module, and cannot be read and written in parallel. An instruction 3 is distributed in another bank module, and a processing process of the instruction 3 may be parallel with those of the instruction 0, the instruction 1, and the instruction 2. In addition, there is a write after read conflict between the instruction 1 and the instruction 0. Therefore, the instruction 1 can be read only after the instruction 0 is written.

It can be learned from an example shown in diagram (b) that, in an instruction execution process, the instruction 0 and the instruction 1 first enter scheduling in parallel, and the bank module 1023 identifies a write after read RAW dependency between the instruction 0 and the instruction 1. Therefore, the instruction 1 starts to wait for completion of the instruction 0. During this period, the instructions 2 and 3 are also input for scheduling. Because the instruction 3 is on another bank module, and does not conflict with the other instructions, the instruction 3 can be executed without limitation.

It can be learned from the example shown in diagram (b) that the bank and the near-memory circuit of the bank module 1023 may respectively execute the instruction 0 and the instruction 2 at the same time. For example, when the near-memory circuit of the bank module 1023 performs computing, the memory bank is in an idle state. Therefore, when the instruction 0 performs a near-memory circuit computing operation, the instruction 2 may perform a read operation at the same time.

In addition, it can be further learned from the example shown in diagram (b) that, because the instruction 2 is used as a max instruction, a reading part is divided into two steps: identifying a maximum value and reading the maximum value, respectively. After the first step of reading is completed, the instruction 0 completes waiting for the instruction 2, the instruction 0 occupies the bank to complete a write operation, and then the instruction 2 continues to perform a read operation. Therefore, the instruction 1 can complete a write operation on the idle bank only after the instruction 2 is written.

It can be learned from the foregoing embodiment that, in the embodiment of this application, the compute-in-memory system can generate a tensor instruction set based on a compilation operator, and can process a tensor object by using the tensor instruction set, to implement a memory bank-level operation on the compute-in-memory system, thereby improving processing parallelism of processing computing tasks by the compute-in-memory system, and further improving computing performance of the compute-in-memory system.

Based on the foregoing method embodiment, an embodiment of this application further provides an operator compilation apparatus. The following specifically describes the operator compilation apparatus provided in the embodiment of this application.

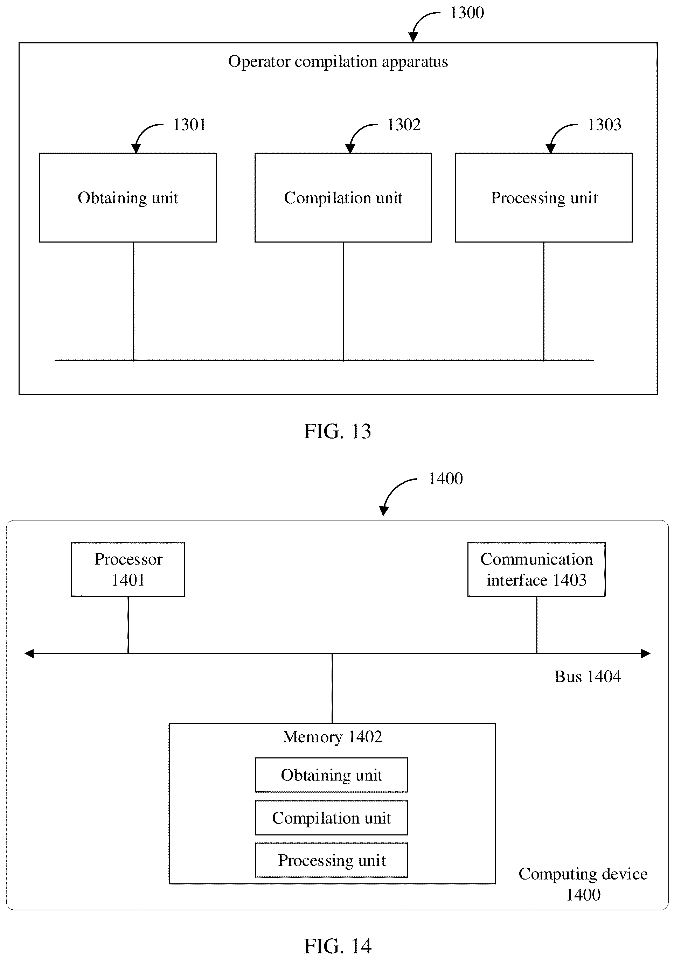

FIG. 13 is a diagram of a structure of an operator compilation apparatus according to an embodiment of this application. In an example shown in FIG. 13, an operator compilation apparatus 1300 is configured to implement steps performed by the compute-in-memory system in the foregoing embodiments. The operator compilation apparatus 1300 includes an obtaining unit 1301, a compilation unit 1302, and a processing unit 1303.

The obtaining unit 1301 is configured to obtain a compilation operator, where the compilation operator indicates a compilation rule for source code. The compilation unit 1302 is configured to compile the source code based on the compilation operator, to obtain one or more tensor instructions, where the tensor instruction is used to execute a computing task in the compute-in-memory system, and the tensor instruction includes one or more of the following instruction segments: an operation code, a tensor address, a data type, a data bit width, and a tensor length. The processing unit 1303 is configured to store the tensor instruction into an instruction storage list, where the instruction storage list is used to store a compiled tensor instruction.

In some possible implementations, the processing unit 1303 is further configured to create a compilation operator table, where the compilation operator table is used to store compilation information corresponding to one or more compilation operators, and the compilation information includes one or more of the following: an operator number, a row address, a column address, an output address, a data type, a data bit width, and a tensor length. The compilation unit 1302 is specifically configured to generate one or more tensor instructions based on the compilation information stored in the compilation operator table.

In some possible implementations, the compilation unit 1302 is specifically configured to: generate an operation code of the tensor instruction based on the operator number in the compilation operator table, generate a tensor address of the tensor instruction based on the row address, the column address, and the output address that are in the compilation operator table, and generate a data type, a data bit width, and a tensor length of the tensor instruction respectively based on the data type, the data bit width, and the tensor length that are in the compilation operator table.

In some possible implementations, the instruction type includes one or more of the following: an address-only participation instruction, a numeric value participation instruction, a bank control instruction, and a near-memory circuit control instruction.

In some possible implementations, the compilation unit 1302 is further configured to determine an instruction status of the tensor instruction in the instruction storage list based on an instruction association matrix and a bank status list, where the instruction association matrix is used to store a dependency between the tensor instructions, the bank status list indicates a status of a bank module, the bank module is configured to execute the tensor instruction, and the instruction status includes an executable state and a waiting state.

In some possible implementations, the processing unit 1303 is further configured to: when the instruction status of the tensor instruction is the executable state, send the tensor instruction to a memory access control unit; and determine an execution operation based on the tensor instruction, where the execution operation includes one or more of the following: a near-memory computing operation, an in-memory computing operation, and a normal read/write operation.

In some possible implementations, the tensor instruction includes a first tensor instruction and a second tensor instruction, the first tensor instruction and the second tensor instruction are executed in a same bank module, the processing unit 1303 is further configured to simultaneously execute the first tensor instruction and the second tensor instruction respectively in different execution units of the bank module, and the execution unit includes a bank and a near-memory circuit.

In some possible implementations, the dependency between the tensor instructions includes one or more of the following: a write after read dependency, a write after write dependency, and a read after write dependency.

In some possible implementations, the bank status list includes one or more of the following: a bank module idle status and a near-memory circuit status.

In some possible implementations, the instruction storage list includes one or more of the following: an instruction segment of the tensor instruction, a tensor instruction number, a compilation operator number, and a bank block identifier.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all the embodiments described in this specification are example embodiments, and the related actions are not necessarily mandatory to this application.

Another appropriate step combination that can be figured out by a person skilled in the art according to the content described above also falls within the protection scope of this application. In addition, a person skilled in the art should also be familiar to embodiments described in this specification all belong to example embodiments, and related actions are not necessarily mandatory in this application.

FIG. 14 is a diagram of a structure of a computing device according to an embodiment of this application. As shown in FIG. 14, the computing device 1400 includes a processor 1401, a memory 1402, a communication interface 1403, and a bus 1404. The processor 1401, the memory 1402, and the communication interface 1403 are coupled by using the bus (not marked in the figure). The memory 1402 stores instructions. When executable instructions in the memory 1402 are executed, the computing device 1400 performs the method performed by the compute-in-memory system in the foregoing method embodiments.

The computing device 1400 may be one or more integrated circuits configured to perform the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 1401 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory 1402 may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1402 stores executable program code, and the processor 1401 executes the executable program code to separately implement functions of the obtaining unit 1301, the processing unit 1302, and the processing unit 1303, to implement the foregoing method for compressing a routing table. That is, the memory 1402 stores instructions used to perform the foregoing method for compressing a routing table.

The communication interface 1403 uses a transceiver module, for example, but not limited to, a network interface card or a transceiver, to implement communication between the computing device 1400 and another device or a communication network.

In addition to a data bus, the bus 1404 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

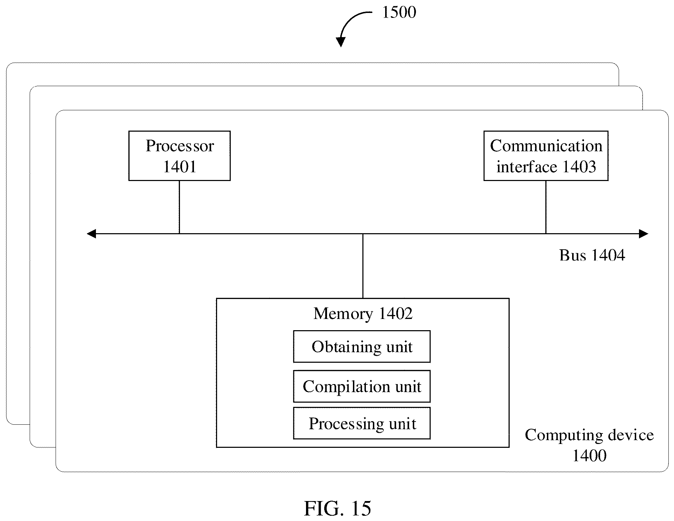

FIG. 15 is a diagram of a computing device cluster according to an embodiment of this application. As shown in FIG. 15, the computing device cluster 1500 includes at least one computing device 1400.

As shown in FIG. 15, the computing device cluster 1500 includes at least one computing device 1400. Memories 1402 in one or more computing devices 1400 in the computing device cluster 1500 may store same instructions used to perform the foregoing method for compressing a routing table.

In some possible implementations, alternatively, the memories 1402 in the one or more computing devices 1400 in the computing device cluster 1500 each may store a part of instructions used to perform the foregoing method for compressing a routing table. In other words, a combination of the one or more computing devices 1400 may jointly execute the instructions used to perform the foregoing method for compressing a routing table.

It should be noted that memories 1402 of different computing devices 1400 in the computing device cluster 1500 may store different instructions respectively used to perform some functions of the foregoing operator compilation apparatus. In other words, instructions stored in memories 1402 in different computing devices 1400 may implement functions of one or more modules of the obtaining unit 1301, the compilation unit 1302, and the processing unit 1303.

In some possible implementations, the one or more computing devices 1400 in the computing device cluster 1500 may be connected through a network. The network may be a wide area network, a local area network, or the like.

In another embodiment of this application, a computer-readable storage medium is further provided. The computer-readable storage medium stores computer-executable instructions. When a processor of a device executes the computer-executable instructions, the device performs the method performed by the compute-in-memory system in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the compute-in-memory system in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An operator compilation method, applied to a compute-in-memory system, wherein the method comprises:
obtaining a compilation operator, wherein the compilation operator indicates a compilation rule for source code;
compiling the source code based on the compilation operator, to obtain one or more tensor instructions, wherein the tensor instruction is used to execute a computing task in the compute-in-memory system, and the tensor instruction comprises one or more of the following instruction segments: an operation code, a tensor address, a data type, a data bit width, and a tensor length; and
storing the tensor instruction into an instruction storage list, wherein the instruction storage list is used to store a compiled tensor instruction.

2. The method according to claim 1, wherein before the source code is compiled based on the compilation operator, the method further comprises:
creating a compilation operator table, wherein the compilation operator table is used to store compilation information corresponding to one or more compilation operators, and the compilation information comprises one or more of the following: an operator number, a row address, a column address, an output address, a data type, a data bit width, and a tensor length; and
compiling the source code based on the compilation operator comprises:
generating one or more tensor instructions based on the compilation information stored in the compilation operator table.

3. The method according to claim 2, wherein generating the one or more tensor instructions based on the compilation information stored in the compilation operator table comprises:
generating an operation code of the tensor instruction based on the operator number in the compilation operator table;
generating a tensor address of the tensor instruction based on the row address, the column address, and the output address that are in the compilation operator table; and
generating a data type, a data bit width, and a tensor length of the tensor instruction respectively based on the data type, the data bit width, and the tensor length that are in the compilation operator table.

4. The method according to any one of claims 1 to 3, wherein the instruction type comprises one or more of the following: an address-only participation instruction, a numeric value participation instruction, a bank control instruction, and a near-memory circuit control instruction.

5. The method according to any one of claims 1 to 4, wherein the method further comprises:
determining an instruction status of the tensor instruction in the instruction storage list based on an instruction association matrix and a bank status list, wherein the instruction association matrix is used to store a dependency between the tensor instructions, the bank status list indicates a status of a bank module, the bank module is configured to execute the tensor instruction, and the instruction status comprises an executable state and a waiting state.

6. The method according to claim 5, wherein the method further comprises:
when the instruction status of the tensor instruction is the executable state, sending the tensor instruction to a memory access control unit; and
determining an execution operation based on the tensor instruction, wherein the execution operation comprises one or more of the following: a near-memory computing operation, an in-memory computing operation, and a normal read/write operation.

7. The method according to any one of claims 1 to 6, wherein the tensor instruction comprises a first tensor instruction and a second tensor instruction, the first tensor instruction and the second tensor instruction are executed in a same bank module, and the method further comprises:
simultaneously executing the first tensor instruction and the second tensor instruction respectively in different execution units of the bank module, wherein the execution unit comprises a bank and a near-memory circuit.

8. The method according to any one of claims 5 to 7, wherein the dependency between the tensor instructions comprises one or more of the following: a write after read dependency, a write after write dependency, and a read after write dependency.

9. The method according to any one of claims 5 to 8, wherein the bank status list comprises one or more of the following: a bank module idle status and a near-memory circuit status.

10. The method according to any one of claims 5 to 9, wherein the instruction storage list comprises one or more of the following: an instruction segment of the tensor instruction, a tensor instruction number, a compilation operator number, and a bank block identifier.

11. An operator compilation apparatus, wherein the apparatus comprises:
an obtaining unit, configured to obtain a compilation operator, wherein the compilation operator indicates a compilation rule for source code;
a compilation unit, configured to compile the source code based on the compilation operator, to obtain one or more tensor instructions, wherein the tensor instruction is used to execute a computing task in the compute-in-memory system, and the tensor instruction comprises one or more of the following instruction segments: an operation code, a tensor address, a data type, a data bit width, and a tensor length; and
a processing unit, configured to store the tensor instruction into an instruction storage list, wherein the instruction storage list is used to store a compiled tensor instruction.

12. The apparatus according to claim 11, wherein the processing unit is further configured to:
create a compilation operator table, wherein the compilation operator table is used to store compilation information corresponding to one or more compilation operators, and the compilation information comprises one or more of the following: an operator number, a row address, a column address, an output address, a data type, a data bit width, and a tensor length; and
the compilation unit is specifically configured to:
generate one or more tensor instructions based on the compilation information stored in the compilation operator table.

13. The apparatus according to claim 12, wherein the compilation unit is specifically configured to:
generate an operation code of the tensor instruction based on the operator number in the compilation operator table;
generate a tensor address of the tensor instruction based on the row address, the column address, and the output address that are in the compilation operator table; and
generate a data type, a data bit width, and a tensor length of the tensor instruction respectively based on the data type, the data bit width, and the tensor length that are in the compilation operator table.

14. The apparatus according to any one of claims 11 to 13, wherein the instruction type comprises one or more of the following: an address-only participation instruction, a numeric value participation instruction, a bank control instruction, and a near-memory circuit control instruction.

15. The apparatus according to any one of claims 11 to 14, wherein the compilation unit is further configured to:
determine an instruction status of the tensor instruction in the instruction storage list based on an instruction association matrix and a bank status list, wherein the instruction association matrix is used to store a dependency between the tensor instructions, the bank status list indicates a status of a bank module, the bank module is configured to execute the tensor instruction, and the instruction status comprises an executable state and a waiting state.

16. The apparatus according to claim 15, wherein the processing unit is further configured to:
when the instruction status of the tensor instruction is the executable state, send the tensor instruction to a memory access control unit; and
determine an execution operation based on the tensor instruction, wherein the execution operation comprises one or more of the following: a near-memory computing operation, an in-memory computing operation, and a normal read/write operation.

17. The apparatus according to any one of claims 11 to 16, wherein the tensor instruction comprises a first tensor instruction and a second tensor instruction, the first tensor instruction and the second tensor instruction are executed in a same bank module, and the processing unit is further configured to:
simultaneously execute the first tensor instruction and the second tensor instruction respectively in different execution units of the bank module, wherein the execution unit comprises a bank and a near-memory circuit.

18. The apparatus according to any one of claims 15 to 17, wherein the dependency between the tensor instructions comprises one or more of the following: a write after read dependency, a write after write dependency, and a read after write dependency.

19. The apparatus according to any one of claims 15 to 18, wherein the bank status list comprises one or more of the following: a bank module idle status and a near-memory circuit status.

20. The apparatus according to any one of claims 15 to 19, wherein the instruction storage list comprises one or more of the following: an instruction segment of the tensor instruction, a tensor instruction number, a compilation operator number, and a bank block identifier.

21. A computing device, comprising a processor, wherein the processor is coupled to a memory, the processor is configured to store instructions, and when the instructions are executed by the processor, the electronic device is enabled to perform the method according to any one of claims 1 to 10.

22. A computing device cluster, comprising at least one computing device, wherein the computing device comprises a processor, the processor is coupled to a memory, the processor is configured to store instructions, and when the instructions are executed by the processor, the computing device cluster is enabled to perform the method according to any one of claims 1 to 10.

23. A computer-readable storage medium, wherein the computer-readable storage medium stores instructions, and when the instructions are executed, a computer is enabled to perform the method according to any one of claims 1 to 10.

24. A computer program product, wherein the computer program product comprises instructions, and when the instructions are executed, a computer is enabled to implement the method according to any one of claims 1 to 10.
